# EUROPEAN PATENT APPLICATION

(11) **EP 3 026 527 A1**
(43) Date of publication of application: **01.06.2016**
(21) Application number: 14828807.9
(22) Date of filing: 09.05.2014
(51) Int. Cl.: G06F 3/01, G06F 3/14, G06F 3/041, G06F 3/048

(54) **METHOD AND APPARATUS FOR INPUT AND POINTER USING BORDER TOUCH**

(30) Priority: 23.07.2013 KR 20130086798
(71) Applicant: Won, Hyuk, Busan 601-821 (KR)
(72) Inventor: PARK, Gwan Soo, Busan 611-766 (KR); JU, Hye Sun, Busan 609-836 (KR); WON, Hyuk, Busan 601-821 (KR)
(74) Representative: Studio Torta S.p.A.
(86) International application number: PCT/KR2014/004126
(87) International publication number: WO 2015/012478

(57) **Abstract**

Provided are a method and an apparatus for detecting whether the posture in which a terminal is grasped by a user is a first predetermined posture, and if the first predetermined posture is detected, for displaying a GUI object on a touchscreen of the terminal. Additionally provided are a method and an apparatus for detecting whether the posture in which a terminal is grasped by a user is the first predetermined posture, and if the first predetermined posture is detected, for the touchscreen receiving a touch from the user and generating a pointer for the touch.

## Description

### Technical Field

Example embodiments relate to input and pointing providing technology, and more particularly, to a method and apparatus for providing input and pointing of a terminal.

### Background Art

An arrangement of a keypad of a mobile terminal may be similar to an arrangement of a general keyboard. Based on the similarity, the mobile terminal may provide a convenient input function. However, small buttons of the keypad may cause a touch error.

Various input methods have been provided to improve the aforementioned arrangement. Among the input method, a Chonjiin input method may provide larger buttons when compared to the other input methods. Thus, by applying the Chonjiin input method, a probability that the touch error occurs may decrease. Also, a user may use a Chonjiin keyboard through a short training. However, it may be difficult to apply the Chonjiin input method to languages other than Korean.

In general, current mobile terminals such as a smartphone may include a touchscreen to perform an input. The mobile terminal including the touchscreen may be difficult to implement functions corresponding to a left button click and a right button click of a mouse of a computer. Concisely, the mobile terminal may have a limitation on providing click, drag, and moving functions of a pointer. Thus, to increase a user convenience and a usefulness of the mobile terminal, the mobile terminal may need to implement the left button click and the right button click of the mouse.

Korea Patent Laid-open Publication No. 10-2006-0128223 published on December 14, 2006 discloses an invention related to a device and method for inputting characters using circular key arrangement. In the disclosed invention, a plurality of characters may be classified into a predetermined number of groups and each of the groups may be assigned to one direction key. When a user inputs through a direction key, characters belonging to the group assigned to the directional key may be sequentially selected based on the number of inputs, thereby minimizing the number of key inputs for inputting characters.

The information described above is merely for explanation purposes, and may include information that does not form part of related arts, including those that may not be presented to those skilled in the art.

### Disclosure of Invention

### Technical Goals

An aspect provides a method and apparatus for displaying a graphical user interface (GUI) object on a touchscreen of a terminal based on a posture of gripping an edge of the terminal by detecting the posture.

Another aspect provides a method and apparatus for detecting a posture of gripping an edge of a terminal, recognizing a touch on a touchscreen of the terminal, and controlling a pointer based on the detected posture and the recognized touch.

### Technical Solutions

According to an aspect, there is provided a method of providing a touch input of a terminal, the method including detecting that a posture of a user gripping an edge of the terminal is a first predetermined posture, and displaying a graphical user interface (GUI) object on a touchscreen of the terminal when the first predetermined posture is detected.

The GUI object may be an alphanumeric keypad.

The first predetermined posture may be a posture that all five fingers of one hand of the user are in contact with the edge of the terminal.

The method may further include detecting that a posture of the user gripping the edge of the terminal is a second predetermined posture.

The method may further include changing the GUI object displayed on the touchscreen when the second predetermined posture is detected.

The second predetermined posture may be a posture in which the first predetermined posture is modified by modifying a posture of one finger among the five fingers.

The modifying is removing the one finger from the edge.

According to another aspect, there is also provided a terminal providing a touch input, the terminal including a touchscreen configured to receive a touch input of a user, and a processor configured to detect that a posture of the user gripping an edge of the terminal is a first predetermined posture and display a GUI object on the touchscreen when the first predetermined posture is detected.

According to still another aspect, there is also provided a method of providing a touch input of a terminal, the method including detecting that a posture of a user gripping an edge of the terminal is a first predetermined posture, recognizing a touch on a touchscreen of the terminal in a state in which the edge is gripped at the first predetermined posture, and displaying a pointer at a position of the touch on the touchscreen.

The first predetermined posture may be a posture that all five fingers of one hand are in contact with the edge of the terminal.

The method may further include detecting that a posture of the user gripping the edge of the terminal while the touch is maintained is a second predetermined posture.

The method may further include generating a first GUI event.

The generated first GUI event may be determined based on the detected second predetermined posture.

The generating of the first GUI event may include generating the first GUI event corresponding to the detected second predetermined posture with respect to a GUI object indicated by the pointer.

A plurality of second predetermined postures and a plurality of first GUI events may be provided, and the plurality of second predetermined postures may correspond to the plurality of GUI events, respectively.

The method may further include recognizing a drag of the touch in a state in which the edge is gripped of the second predetermined posture.

The method may further include generating a second GUI event corresponding to the recognized drag.

The method may further include re-detecting the first predetermined posture after the second predetermined posture is detected.

The generating of the first GUI event may be performed after the re-detecting.

According to yet another aspect, there is also provided a terminal providing a touch input, the terminal including a touchscreen configured to receive a touch input of a user, and a processor configured to detect that a posture of a user gripping an edge of the terminal is a first predetermined posture, recognizes a touch on the touchscreen in a state in which the edge is gripped of the first predetermined posture, and display a pointer at a position of the touch on the touchscreen.

### Advantageous Effects

According to an example embodiment, it is possible to reduce an input error by adjusting a keypad arrangement through an edge touching, and increase a user convenience by applying an intuitive keypad arrangement.

According to another example embodiment, it is possible to provide click, drag, moving functions of a pointer and provide functions of a left button and a right button of a mouse of a computer through an edge touching.

### Brief Description of Drawings

FIG. 1 illustrates an example of an edge of a terminal.
FIG. 2 illustrates an example of an edge of a terminal including a flexible touchscreen.
FIG. 3 illustrates an example of provided functions.
FIG. 4 illustrates an example of postures that a user grips an edge of a terminal.
FIG. 5 illustrates an example of a touch input providing apparatus.
FIG. 6 is a flowchart illustrating an example of a touch input providing method.
FIG. 7 illustrates an example of a graphical user interface (GUI) object displayed on a touchscreen when a first predetermined posture is detected.
FIG. 8 illustrates an example of a changed GUI object displayed on a touchscreen when a second predetermined posture is detected.
FIG. 9 illustrates an example of a GUI object and a changed GUI object displayed on a touchscreen.
FIG. 10 is a flowchart illustrating another example of a touch input providing method.
FIG. 11 illustrates an example of fingers changed to generate an event of a smartphone corresponding to a left button click or a right button click of a mouse.
FIG. 12 illustrates an example of a method of displaying a pointer at a position of a touch in a state in which a first predetermined posture is detected.
FIG. 13 illustrates an example of a method of generating a first GUI event corresponding to a left button click of a mouse with respect to a GUI object indicated by a pointer.
FIG. 14 illustrates an example of a method of generating a first GUI event corresponding to a right button click of a mouse with respect to a GUI object indicated by a pointer.
FIG. 15 illustrates an example of a method of generating a second GUI event of a pointer corresponding to a left button drag of a mouse.
FIG. 16 illustrates an example of a method of generating a second GUI event of a pointer corresponding to a right button drag of a mouse.

### Best Mode for Carrying Out the Invention

Hereinafter, some example embodiments will be described in detail with reference to the accompanying drawings. Like numbers refer to like elements throughout the description of the figures.

It should be understood, however, that there is no intent to limit this disclosure to the particular example embodiments disclosed. On the contrary, example embodiments are to cover all modifications, equivalents, and alternatives falling within the scope of the example embodiments.

As used herein, the singular forms "a," "an" and "the" are intended to include the plural forms as well, unless the context clearly indicates otherwise. It will be further understood that the terms "include" and/or "have," when used in this specification, specify the presence of stated features, integers, steps, operations, elements, components or combinations thereof, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which these example embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

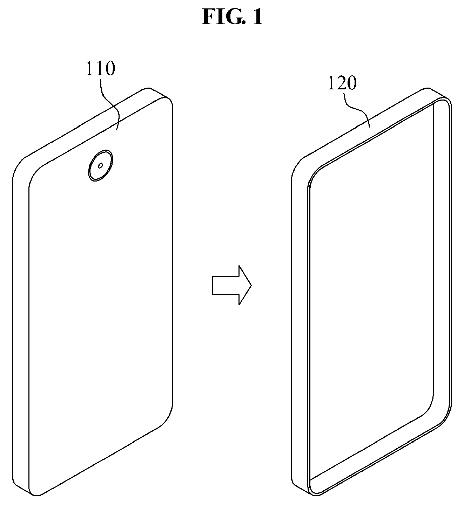

FIG. 1 illustrates an example of an edge of a terminal.

The term "edge" used in example embodiments may indicate a border of a side of a terminal and a vicinity of the border. The edge may be a portion connected to a touchscreen of the terminal.

FIG. 1 illustrates a side surface and a rear surface of a terminal 110. In terms of the terminal 110, an edge may be a side surface 120 excluding the rear surface. Also, the edge of the terminal may include a portion of a front surface or a portion of the rear surface. Concisely, the edge may be a part or all of sides of the touchscreen.

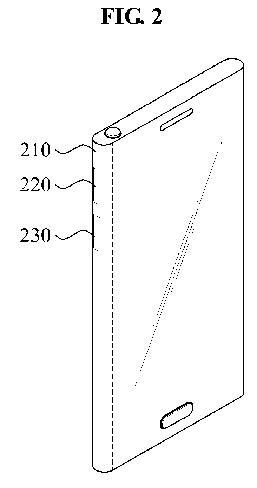

FIG. 2 illustrates an example of an edge of a terminal including a flexible touchscreen.

In the terminal including the flexable touchscreen, an extending portion of the flexible touchscreen may be the edge of the terminal.

In FIG. 2, a single flexible touchscreen may form a front surface and a side surface. An edge 210 of the terminal may be a portion of the flexible touchscreen. The flexible touchscreen may be divided into a touchscreen part and an edge based on a portion indicated by a dashed line. The dashed line may correspond to an exterior of terminal and thus, may not be exposed externally.

The dashed line may be a portion in which the flexible touchscreen is curved or a portion in which a curvature of the flexible touchscreen changes. For example, the dashed line may indicate a flat portion of a display is connected with a curved portion of the display. The portion corresponding to the dashed line in the flexible touchscreen, for example, a portion formed to be an edge may be set by a user. The edge 210 may include a left side and a right side of the terminal.

Buttons 220 and 230 may be graphical user interface (GUI) objects displayed on the flexible touch screen in lieu of physical buttons.

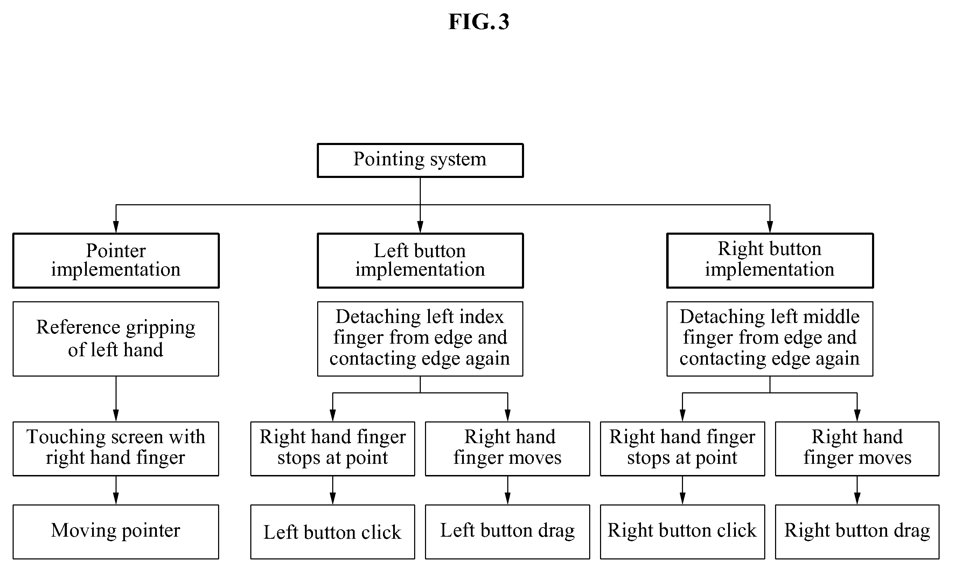

FIG. 3 illustrates an example of provided functions.

Referring to a pointing system illustrated in this drawing, a left button and a right button of a mouse, and a pointer may be provided on a touchscreen of a terminal. Also, based on the pointing system, events corresponding to a movement of a pointer for a mouse of a computer, a left button click, a left button drag, a right button click, and a right button drag of the mouse may be generated in a terminal such as a smartphone.

In the pointing system, a GUI object or a pointer may be controlled based on whether fingers of a left hand touch an edge in a state in which a user is holding the terminal with the left hand.

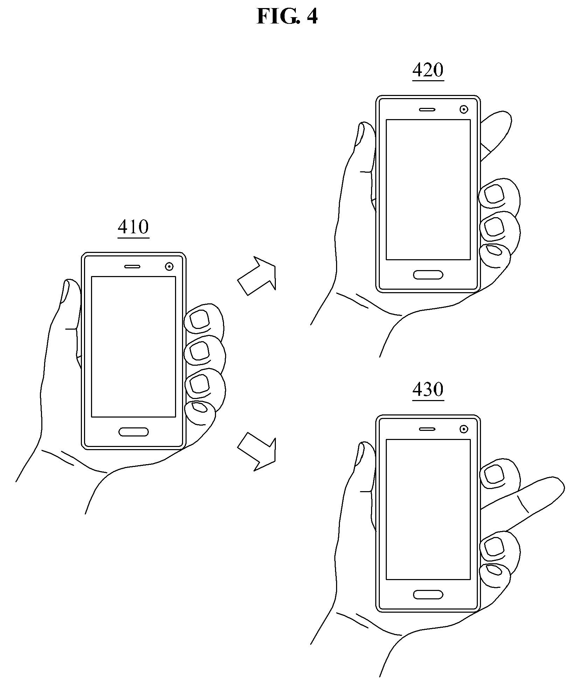

Hereinafter, various example embodiments will be described with reference to FIGS. 4 through 16.

FIG. 4 illustrates an example of postures that a user grips an edge of a terminal.

Referring to FIG. 4, a first posture 410 may be a posture that a user grips an edge of a terminal with five fingers of a left hand or a right hand. The first posture 410 may be a posture in which the five fingers of the user are in contact with the edge of the terminal. As an example, when the user uses the left hand, the first posture 410 may be a posture in which a thumb of the left hand is in contact with a left side of the edge and other four fingers are in contact with a right side of the edge.

A second posture 420 may be a posture changed from the first posture 410.

A plurality of postures may be applied to be the second posture 420. For example, the second posture 420 may be a posture in which at least one of the fingers being in contact with the edge in the first posture 410 is removed from the edge.

In an example, as illustrated in FIG. 4, the second posture 420 may be a posture in which an index finger of the first posture 410 is removed from the edge. Thus, the second posture 420 may be a posture of the user gripping the edge of the terminal with four fingers other than the index finger. Alternatively, the second posture 430 may be a posture in which a middle finger of the first posture 410 is removed from the edge. Thus, in this example, the second posture 430 may be a posture of the user gripping the edge of the terminal with four fingers other than the middle finger.

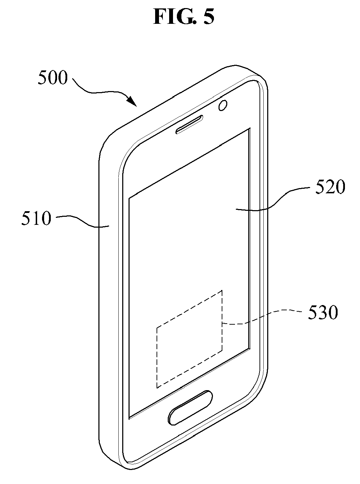

FIG. 5 illustrates an example of a touch input providing apparatus.

A terminal 500 may include, for example, a smartphone, a tablet computer, a notebook, a desktop computer, and a personal digital assistant (PDA). The terminal 500 may be a mobile terminal.

The terminal 500 may include an edge 510, a touchscreen 520, and a processor 530.

The terminal 510 may be a portion of an exterior, a case, or housing. The edge 510 may be one of portions configuring the terminal 500, and may be a portion classified as a side of the terminal 500.

The processor 530 or the edge 510 may sense and detect a touch performed by the user on the edge 510. The processor 530 or the edge 510 may recognize and detect touches of fingers in an overall range of the edge 510. For example, the processor 530 or the edge 510 may recognize and detect a number of fingers touching the edge 510 and a position at which the touching is performed.

Also, the processor 530 or the edge 510 may detect that a posture of the user gripping the edge 510 of the terminal is a predetermined posture. The predetermined posture may be set based on the number of fingers touching the edge 510 and a position at which the touching is performed.

The touchscreen 520 may receive a touch input from the user.

The processor 530 may display a GUI on the touchscreen 520. When the predetermined posture is detected, the processor 530 may display a GUI object on the touchscreen 520. When the touch is recognized on the touchscreen 520 in a state in which the edge is gripped at the predetermined posture, the processor 530 may display a pointer at a position of the touch on the touchscreen 520.

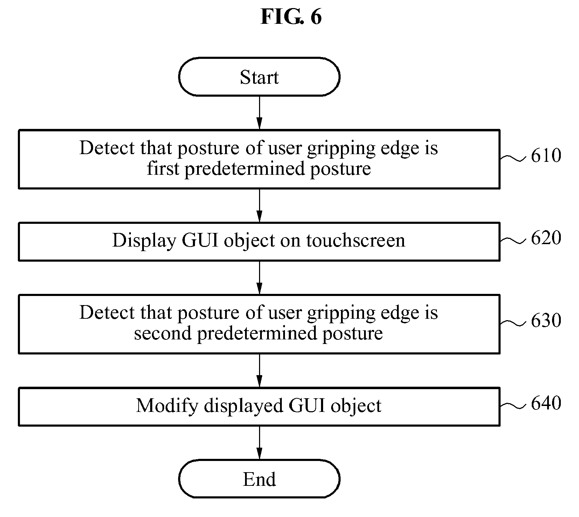

FIG. 6 is a flowchart illustrating an example of a touch input providing method.

In operation 610, the processor 530 or the edge 510 may detect that a posture of a user gripping the edge of the terminal 500 is a first predetermined posture. The first predetermined posture may be, for example, a posture the user of the terminal 500 touches the edge 510 with all five fingers of one hand. Also, the first predetermined posture may be the first posture 410 of FIG. 4.

In operation 620, the processor 530 may display a GUI object on the touchscreen 520 when the first predetermined posture is detected by the processor 530 or the edge 510. The displayed GUI object may be, for example, an alphanumeric keypad.

In operation 630, the processor 530 or the edge 510 may detect that a posture of the user gripping the edge 510 of the terminal 500 is a second predetermined posture. The second predetermined posture may be, for example, a posture in which a posture of one finger is changed among the five fingers of the first predetermined posture. The one finger may be, for example, an index finger or a middle finger. As an example, the changed posture may be a removal of one finger in contact with the edge 510 from the edge 510. Also, the second predetermined posture may be, for example, the second posture 420 or the second posture 430 of FIG. 4.

As another example, the changed posture may be moving the one finger in contact with the edge 510 from a contacting position to another position on the edge 510 while rubbing the edge 510.

In operation 640, the processor 530 may change or modify the GUI object displayed on the touchscreen 520 when the second predetermined posture is detected by the processor 530 or the edge 510.

Here, the modifying of the GUI object may be modifying a portion of function or form of the GUI object. The changing of the GUI object may be changing the displayed GUI object from one GUI object to another GUI object. The GUI object to be modified or changed may have a relationship with the modified or changed GUI object in, for example, forms, functions, usages, and purposes.

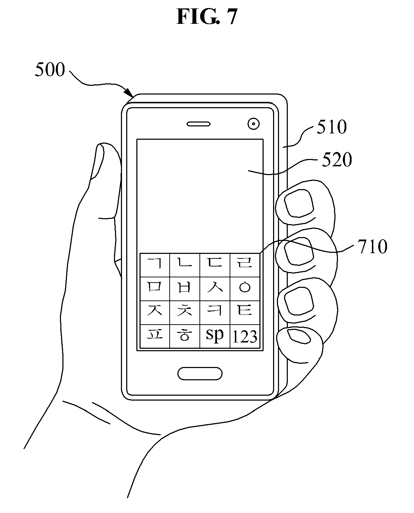

The modifying and changing of the GUI object will be described as an example with reference to FIGS. 7 through 9.

FIG. 7 illustrates an example of a GUI object displayed on a touchscreen when a first predetermined posture is detected.

In FIG. 7, a user of the terminal 500 may grip the edge 510 of the terminal at the first posture 410 of FIG. 4.

When a first posture previously set in the terminal 500 is the first posture 410, the processor 530 or the edge 510 may detect that a posture of the user gripping the edge 510 of the terminal 500 is a first predetermined posture.

When the first predetermined posture is detected by the processor 530 or the edge 510, the processor 530 may display a GUI object on the touchscreen 520 of the terminal. In FIG. 7, the GUI object 710 may be, for example, a Korean consonant keypad.

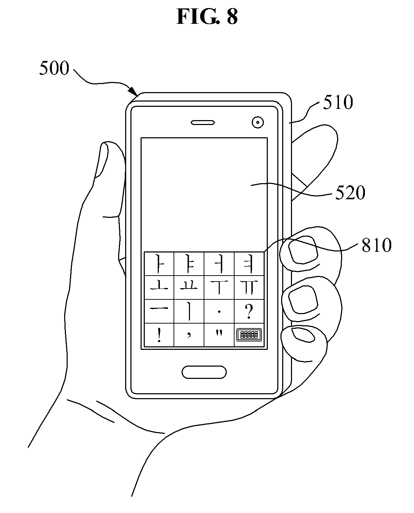

FIG. 8 illustrates an example of a changed GUI object displayed on a touchscreen when a second predetermined posture is detected.

In FIG. 8, a user of the terminal 500 may grip the edge 510 of the terminal at the second posture 420 of FIG. 4.

When the GUI object 710 is detected in response to the detected first predetermined posture, and when a second predetermined posture previously set in the terminal 500 is the second posture 420, the processor 530 or the edge 510 may detect that a posture of the user gripping the edge 510 of the terminal 500 is the second predetermined posture.

When the second predetermined posture is detected by the processor 530 or the edge 510, the processor 530 may change the GUI object 710 displayed on the touchscreen 530 to a GUI object 810. In FIG. 8, the GUI object 810 may be, for example, a Korean vowel keypad.

In FIG. 8, another second posture may be applied in lieu of the second posture 410. The other second posture may be, for example, the second posture 430 of FIG. 4.

Based on the foregoing examples provided with reference to FIGS. 7 and 8, an input error may be reduced based on a Korean keypad adjusted when the processor 530 or the edge 510 detects a posture of a user gripping the edge 510 of the terminal. Also, in the examples, a user convenience may increase by applying an intuitive keypad arrangement.

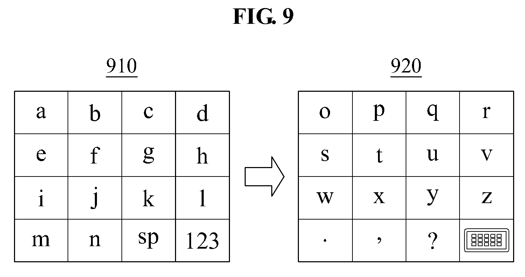

FIG. 9 illustrates an example of a GUI object and a changed GUI object displayed on a touchscreen.

Various GUI objects may be displayed and changed to other GUI object as well as the GUI object 710 and the GUI object 810 described in an example of FIG. 8. For example, the GUI object 710 may be a Korean keypad, and the GUI object 810 may be an English keypad. The GUI object 810 may be an object changed from the GUI object 710.

As an example, FIG. 9 illustrates an English keypad as a GUI object.

In FIG. 9, when the processor 530 or the edge 510 detects a first predetermined posture, the processor 520 may display a first English keypad GUI object 910 on the touchscreen 520. Also, when a second predetermined posture is detected after detection of the first predetermined posture, the processor 530 may display a second English keypad GUI object 920. Here, the first English keypad GUI object 910 may be a keypad displaying a lower-case e through a lower-case n, and the second English keypad GUI object 920 may be a keypad displaying a lower-case o through a lower-case z.

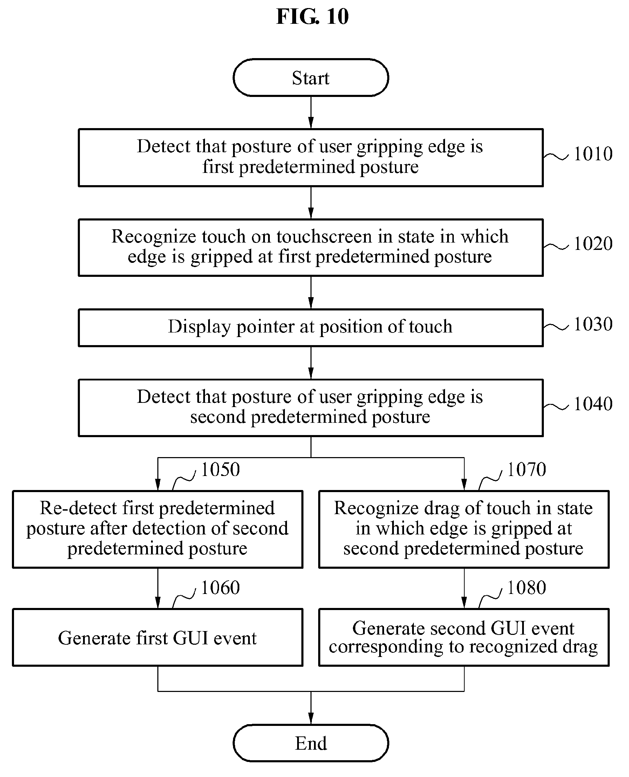

FIG. 10 is a flowchart illustrating another example of a touch input providing method.

Referring to FIG. 10, the processor 530 or the edge 510 may detect a posture of a user gripping the terminal 500, thereby providing moving, drag, and click functions of a pointer.

In operation 1010, the processor 530 or the edge 510 may detect that a posture of the user gripping the edge 510 of the terminal 500 is a first predetermined posture. The first predetermined posture may be, for example, a posture of the user touching the edge 510 of the terminal 500 with all five fingers of one hand. Also, the first predetermined posture may be, for example, the first posture 410 of FIG. 4.

In operation 1020, in a state in which the edge 510 is gripped at the first predetermined posture, the touchscreen 520 may recognize a touch performed by the user on the touchscreen 520 of the terminal 500.

In operation 1030, the processor 530 may display a pointer at a position of the touch on the touchscreen 520. The pointer may be, for example, a cursor and a beam.

In operation 1040, while the touch performed in operation 1030 is maintained, the processor 530 or the edge 510 may detect that a posture of the user gripping the edge 510 is a second predetermined posture. A plurality of postures may be applied as the second predetermined posture. As an example, the second predetermined posture may include the second posture 420 and the second posture 430 of FIG. 4.

Operation 1050 or operation 1070 may be performed after operation 1040.

In operation 1050, after detection of the second predetermined posture in operation 1040, the processor 530 or the edge 510 may re-detect the first predetermined posture.

In operation 1060, the processor 530 may generate a first GUI event. Operation 1060 of generating the first GUI event may be performed after operation 1050 of re-detecting the first predetermined posture.

The first GUI event may be determined based on the second predetermined posture detected in operation 1040. For example, the processor 530 may generate the first GUI event corresponding to the detected second predetermined posture.

A plurality of events may be applied to be the first GUI event. A plurality of second predetermined postures may correspond to a plurality of first GUI events, respectively. As an example, when the second predetermined posture is the second posture 420, a generated first GUI event may be an event corresponding to a left button click of a mouse. As another example, when the second predetermined posture is the second posture 430, a generated first GUI event may be an event corresponding to a right button click of the mouse.

A generation of the first GUI event may be performed on a GUI object indicated by a pointer. For example, each of a plurality of GUI objects may receive a corresponding event, and the processor 530 may generate an event with respect to a predetermined GUI object. The processor 530 may generate the first GUI event corresponding to the second predetermined posture detected with respect to the GUI object.

In operation 1070, the touchscreen 520 may recognize a drag of the touch in a state in which the edge 510 is gripped at the second predetermined posture. Here, the drag of the touch may indicate that a touch point moves while the touch is maintained.

In operation 1080, the processor 530 may generate a second GUI event corresponding to the drag recognized in operation 1070. The generated second GUI event may be determined based on the second predetermined posture detected in operation 1040. For example, the processor 530 may generate the second GUI event corresponding to the second predetermined posture detected with respect to the GUI object.

A plurality of events may be applied to be the second GUI event. A plurality of second predetermined postures may correspond to a plurality of second GUI events, respectively. As an example, when the second predetermined posture is the second posture 420, a generated second GUI event may be an event corresponding to a left button click of a mouse. As another example, when the second predetermined posture is the second posture 430, a generated second GUI event may be an event corresponding to a right button click of the mouse.

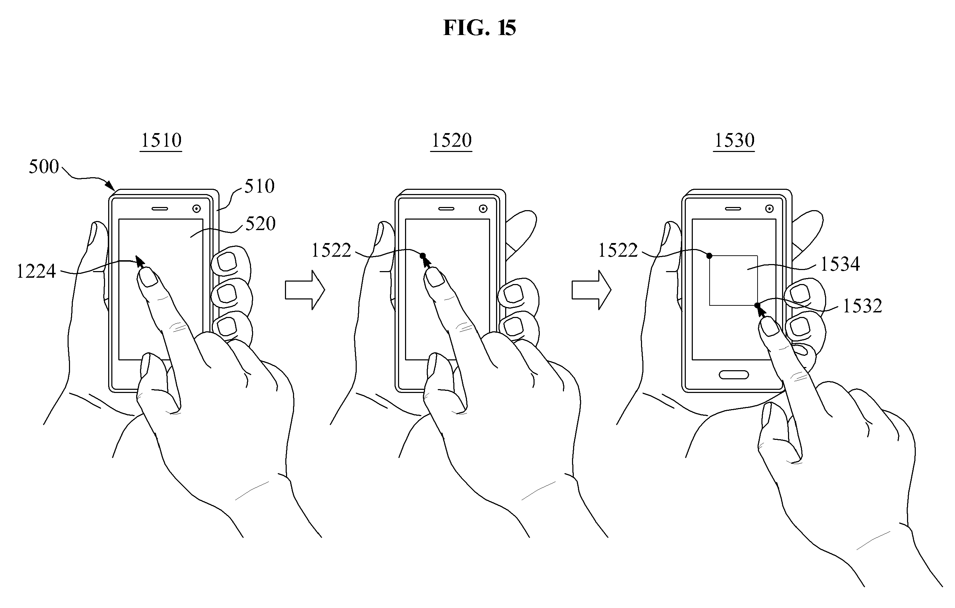

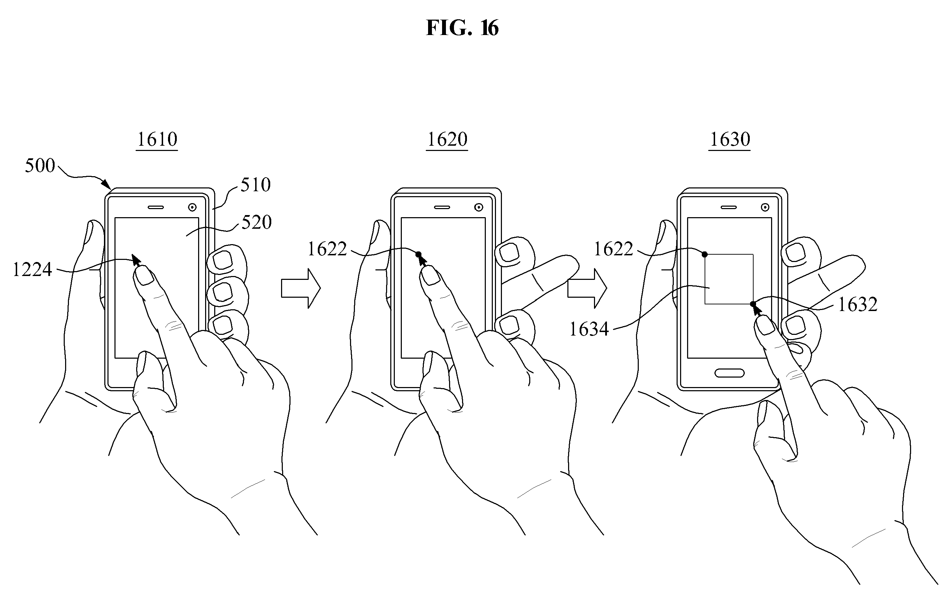

The second GUI event will be also described with reference to FIGS. 15 and 16.

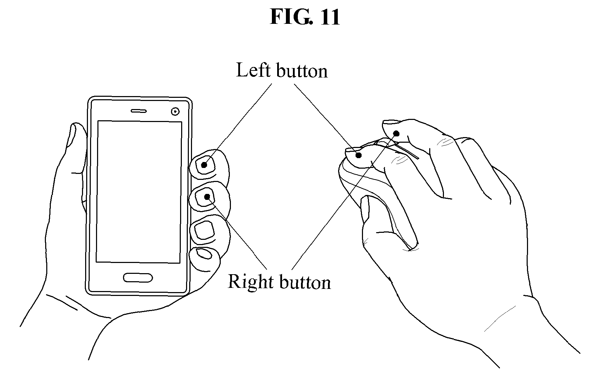

FIG. 11 illustrates an example of fingers changed to generate an event of a smartphone corresponding to a left button click or a right button click of a mouse.

The first posture 410 of FIG. 4 may be set as a reference posture. A change from the reference posture to another posture may correspond to an operation of the mouse. As an example, based on the reference posture, postures related to a change in an index finger may correspond to operations related to a left button of the mouse. As another example, based on the reference posture, postures related to a change in a middle finger may correspond to operations related to a right button of the mouse. Operations related to buttons of the mouse may include a click of a button and a drag performed in a state in which a button is pressed.

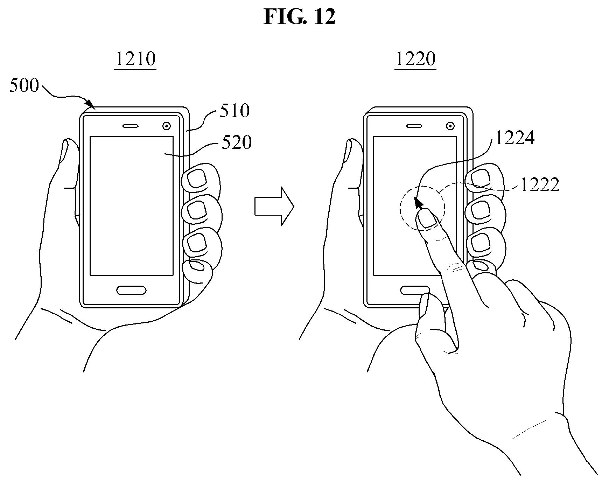

FIG. 12 illustrates an example of a method of displaying a pointer at a position of a touch in a state in which a first predetermined posture is detected.

In operation 1210, the processor 530 may detect that a posture of a user gripping the terminal 500 is a first predetermined posture. The first predetermined posture may be the first posture 410 of FIG. 4.

In operation 1220, in a state in which the edge 510 is gripped at the first predetermined posture, the touchscreen 520 may receive a touch input on the touch screen. In response to the input touch, the processor 530 may display a pointer 1224 at a position 1222 of the touch.

When the touch is dragged in a state in which the edge 510 is gripped at the first predetermined posture, the processor 530 may move the pointer 1224 in response to the dragging.

FIG. 12 illustrates that a point indicated by the pointer 1224 starts from a fingertip part. The processor 530 may also display the pointer 1224 such that an end portion of the pointer 1224 indicates the position of the touch.

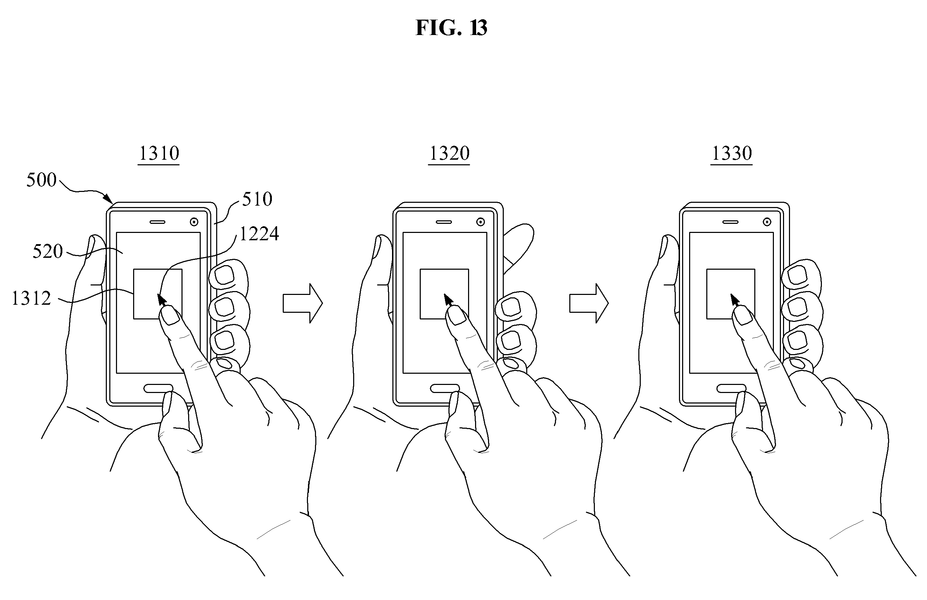

FIG. 13 illustrates an example of a method of generating a first GUI event corresponding to a left button click of a mouse with respect to a GUI object indicated by a pointer.

Operation 1310 may correspond to operation 1224 of FIG. 12.

In operation 1310, a GUI object 1312 may be a GUI object indicated by the pointer 1224. For example, the GUI object 1312 may be a GUI object on which the pointer 124 is located or a GUI object provided below the pointer 1224.

In operation 1320, the processor 530 or the edge 510 may detect that a posture of the user gripping the edge 510 of the terminal 500 in a state in which a touch is maintained is a second predetermined posture. The second predetermined posture of FIG. 13 may be, for example, the second posture 420 of FIG. 4. Also, the second predetermined posture may be, for example, a posture in which an index finger is removed from the edge 510 as compared to a first predetermined posture.

In operation 1330, after detection of the second predetermined posture, the processor 530 or the edge 510 may re-detect the first predetermined posture. The re-detected first predetermined posture may be, for example, a posture that the index finger removed from the edge 510 comes into contact with the edge 510 again.

In operation 1330, when the edge 510 re-detects the first predetermined posture, the processor 530 may generate a first GUI event with respect to the GUI object 1312 corresponding to the re-detected first predetermined posture and the second predetermined posture. The generated first GUI event may be, for example, an event corresponding to a left button click of a mouse. Thus, the first GUI event may indicate a left button click of the mouse performed on the GUI object 1312 on which the pointer 1224 is located.

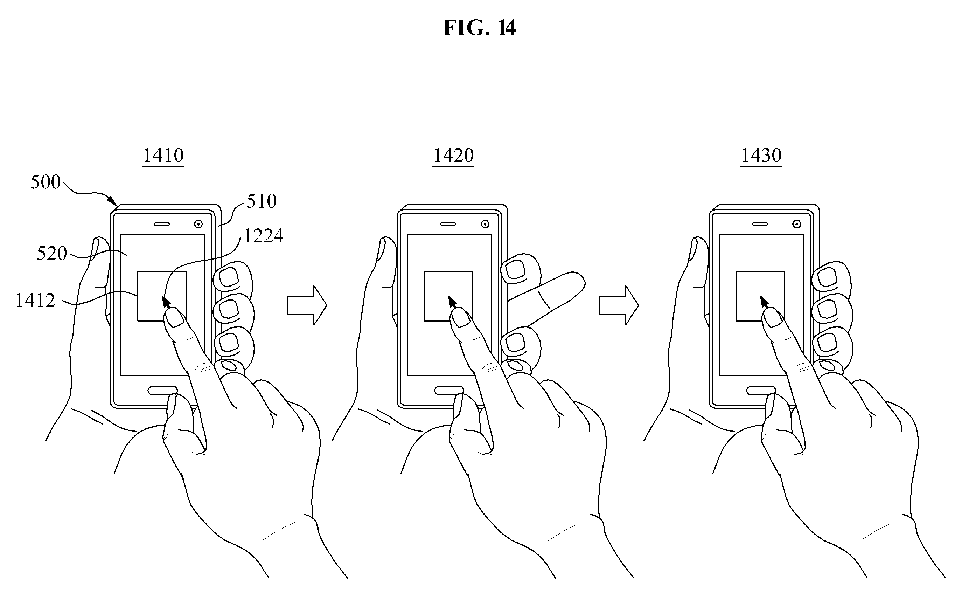

FIG. 14 illustrates an example of a method of generating a first GUI event corresponding to a right button click of a mouse with respect to a GUI object indicated by a pointer.

Operation 1410 may correspond to operation 1224 of FIG. 12.

In operation 1410, a GUI object 1412 may be a GUI object indicated by the pointer 1224.

In operation 1420, the processor 530 or the edge 510 may detect that a posture of the user gripping the edge 510 of the terminal 500 in a state in which a touch is maintained is a second predetermined posture. The second predetermined posture of FIG. 14 may be, for example, the second posture 430 of FIG. 4. Also, the second predetermined posture may be, for example, a posture in which a middle finger is removed from the edge 510 as compared to a first predetermined posture.

In operation 1430, after detection of the second predetermined posture, the processor 530 or the edge 510 may re-detect the first predetermined posture. The re-detected first predetermined posture may be, for example, a posture that the middle finger removed from the edge 510 comes into contact with the edge 510 again.

In operation 1430, when the processor 530 or the edge 510 re-detects the first predetermined posture, the processor 530 may generate a first GUI event with respect to the GUI object 1412 corresponding to the detected first predetermined posture and the second predetermined posture. The generated first GUI event may be, for example, an event corresponding to a right button click of a mouse. Thus, the first GUI event may indicate a right button click of the mouse performed on the GUI object 1412 on which the pointer 1224 is located.

FIG. 15 illustrates an example of a method of generating a second GUI event of a pointer corresponding to a left button drag of a mouse.

Operation 1510 may correspond to operation 1224 of FIG. 12.

In operation 1520, the processor 530 or the edge 510 may detect that a posture of the user gripping the edge 510 of the terminal 500 in a state in which a touch is maintained is a second predetermined posture. The second predetermined posture of FIG. 15 may be, for example, the second posture 420 of FIG. 4. Also, the second predetermined posture may be, for example, a posture in which an index finger is removed from the edge 510 as compared to a first predetermined posture.

The processor 530 may recognize a first position 1522 on which the pointer 1224 is displayed when the processor 530 or the edge 510 detects the second predetermined posture.

In operation 1530, after detection of the second predetermined posture, the touchscreen 520 may receive a position to which the touch is dragged. When the touchscreen 520 receives the position, the processor 530 may relocate the pointer 1224 to the position. The processor 530 may move the pointer 1224 based on the position to which the touch is dragged. The processor 530 may recognize a position touched after the dragging as a second position 1532.

When the processor 530 recognizes the first position 1522 and the second position 1532, the processor 530 may set an area based on the first position 1522 and the second position 1532. As an example, the processor 530 may set a square area 1534 having the first position 1522 and the second position 1532 as vertices facing each other.

In operation 1530, when the square area 1534 is set, the processor 530 may generate a second GUI event corresponding to the square area 1534 and the second predetermined posture. The generated second GUI event may be, for example, an event corresponding to a left button drag of a mouse. As an example, the event corresponding to the left button drag may be an operation of selecting GUI objects included in the square area 1534. As another example, the event corresponding to the left button drag may be an operation of selecting a portion of screen in the square area 1534.

FIG. 16 illustrates an example of a method of generating a second GUI event of a pointer corresponding to a right button drag of a mouse.

Operation 1610 may correspond to operation 1224 of FIG. 12.

In operation 1620, the processor 530 or the edge 510 may detect that a posture of the user gripping the edge 510 of the terminal 500 in a state in which a touch is maintained is a second predetermined posture. The second predetermined posture of FIG. 16 may be, for example, the second posture 430 of FIG. 4. Also, the second predetermined posture may be, for example, a posture in which a middle finger is removed from the edge 510 as compared to a first predetermined posture.

The processor 530 may recognize a first position 1622 on which the pointer 1224 is displayed when the processor 530 or the edge 510 detects the second predetermined posture.

In operation 1630, after detection of the second predetermined posture, the touchscreen 520 may receive a position to which the touch is dragged. When the touchscreen 520 receives the position, the processor 530 may relocate the pointer 1224 to the position. The processor 530 may move the pointer 1224 based on the position to which the touch is dragged. The processor 530 may recognize a position touched after the dragging as a second position 1632.

When the processor 530 recognizes the first position 1622 and the second position 1632, the processor 530 may set an area based on the first position 1522 and the second position 1532. As an example, the processor 530 may set a square area 1634 having the first position 1622 and the second position 1632 as vertices facing each other.

In operation 1630, when the square area 1634 is set, the processor 530 may generate a second GUI event corresponding to the square area 1634 and the second predetermined posture. The generated second GUI event may be, for example, an event corresponding to a right button drag of a mouse. As an example, the event corresponding to the right button drag may be an operation of displaying a control menu for GUI objects included in the square area 1534.

Since the descriptions provided with reference to FIGS. 1 through 15 are also applicable here, repeated descriptions will be omitted for increased clarity and conciseness.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A method of providing a touch input of a terminal, the method comprising:
detecting that a posture of a user gripping an edge of the terminal is a first predetermined posture; and
displaying a graphical user interface (GUI) object on a touchscreen of the terminal when the first predetermined posture is detected.

2. The method of claim 1, wherein the GUI object is an alphanumeric keypad.

3. The method of claim 1, wherein the first predetermined posture is a posture that all five fingers of one hand of the user are in contact with the edge of the terminal.

4. The method of claim 1, further comprising:
detecting that a posture of the user gripping the edge of the terminal is a second predetermined posture; and
changing the GUI object displayed on the touchscreen when the second predetermined posture is detected.

5. The method of claim 4, wherein the second predetermined posture is a posture in which the first predetermined posture is modified by modifying a posture of one finger among the five fingers.

6. The method of claim 5, wherein the modifying is removing the one finger from the edge.

7. A terminal providing a touch input, the terminal comprising:
a touchscreen configured to receive a touch input of a user; and
a processor configured to detect that a posture of the user gripping an edge of the terminal is a first predetermined posture and display a graphical user interface (GUI) object on the touchscreen when the first predetermined posture is detected.

8. A method of providing a touch input of a terminal, the method comprising:
detecting that a posture of a user gripping an edge of the terminal is a first predetermined posture;
recognizing a touch on a touchscreen of the terminal in a state in which the edge is gripped at the first predetermined posture; and
displaying a pointer at a position of the touch on the touchscreen.

9. The method of claim 8, wherein the first predetermined posture is a posture that all five fingers of one hand are in contact with the edge of the terminal.

10. The method of claim 8, further comprising:
detecting that a posture of the user gripping the edge of the terminal while the touch is maintained is a second predetermined posture; and
generating a first graphical user interface (GUI) event,
wherein the generated first GUI event is determined based on the detected second predetermined posture.

11. The method of claim 10, wherein the generating of the first GUI event comprises generating the first GUI event corresponding to the detected second predetermined posture with respect to a GUI object indicated by the pointer.

12. The method of claim 10, wherein a plurality of second predetermined postures and a plurality of first GUI events are provided, and the plurality of second predetermined postures corresponds to the plurality of GUI events, respectively.

13. The method of claim 10, further comprising:
recognizing a drag of the touch in a state in which the edge is gripped of the second predetermined posture; and
generating a second GUI event corresponding to the recognized drag.

14. The method of claim 10, further comprising:
re-detecting the first predetermined posture after the second predetermined posture is detected,
wherein the generating of the first GUI event is performed after the re-detecting.

15. A terminal providing a touch input, the terminal comprising:
a touchscreen configured to receive a touch input of a user; and
a processor configured to detect that a posture of a user gripping an edge of the terminal is a first predetermined posture, recognizes a touch on the touchscreen in a state in which the edge is gripped of the first predetermined posture, and display a pointer at a position of the touch on the touchscreen.
